# EUROPÄISCHE PATENTSCHRIFT

(11) **EP 1 773 571 B1**
(45) Veröffentlichungstag und Bekanntmachung des Hinweises auf die Patenterteilung: **11.02.2015**
(21) Anmeldenummer: 05767841.9
(22) Anmeldetag: 11.07.2005
(51) Int. Cl.: B29C 49/42, B29C 49/64, B29C 33/26, B29C 35/08, B29C 49/06, B29C 49/12, B29C 49/36

(54) **VERFAHREN UND VORRICHTUNG ZUR BLASFORMUNG VON BEHÄLTERN**
METHOD AND DEVICE FOR BLOW MOULDING CONTAINERS
PROCEDE ET DISPOSITIF POUR FORMER DES CONTENANTS PAR SOUFFLAGE

(30) Priorität: 15.07.2004 DE 102004034286
(43) Veröffentlichungstag der Anmeldung: 18.04.2007
(73) Patentinhaber: KHS Corpoplast GmbH, 22145 Hamburg (DE)
(72) Erfinder: BAUMGARTE, Rolf, 22926 Ahrensburg (DE); LINKE, Michael, 22926 Ahrensburg (DE)
(74) Vertreter: Hausfeld, Norbert
(86) Internationale Anmeldenummer: PCT/DE2005/001215
(87) Internationale Veröffentlichungsnummer: WO 2006/005324

(56) Entgegenhaltungen:
- EP-A- 0 305 699
- EP-A- 0 713 758
- US-A- 4 451 426
- US-A- 4 629 389

## Beschreibung

Die Erfindung betrifft ein Verfahren zur Blasformung von Behältern, bei dem ein Vorformling aus einem thermoplastischen Material nach einer thermischen Konditionierung entlang eines Transportweges im Bereich einer Heizstrecke innerhalb einer Blasform durch Blasdruckeinwirkung in den Behälter umgeformt wird.

Die Erfindung betrifft darüber hinaus ein System zur Blasformung von Behältern aus einem thermoplastischen Material, das mindestens eine Vorrichtung zur Blasformung mit entlang eines Transportweges eines Vorformlings angeordneter Heizstrecke und eine mit einer Blasform versehene Blasstation aufweist sowie mindestens einen Vorformling, und bei dem die Blasstation an eine mit einer Blasgassteuerung versehene Blasgaszuführung angeschlossen ist.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Vor einer Durchführung der Beheizung werden die Vorformlinge typischerweise auf Transportdorne aufgesteckt, die den Vorformling entweder durch die gesamte Blasmaschine transportieren oder die lediglich im Bereich der Heizeinrichtung umlaufen. Bei einer stehenden Beheizung der Vorformlinge derart, daß die Mündungen der Vorformlinge in lotrechter Richtung nach unten orientiert sind, werden die Vorformlinge üblicherweise auf ein hülsenförmiges Halterungselement des Transportdornes aufgesteckt. Bei einer hängenden Beheizung der Vorformlinge, bei der diese mit ihren Mündungen in lotrechter Richtung nach oben orientiert sind, werden in der Regel Spreizdorne in die Mündungen der Vorformlinge eingeführt, die die Vorformlinge festklemmen.

Typischerweise werden diese Transportdorne durch einen Hubvorgang in die Vorformlinge eingefahren bzw. die Vorformlinge werden in einem Hub- oder Schwenkvorgang auf die Dorne aufgesetzt. Entsprechende Hub- oder Schwenkvorgänge erfordern einen entsprechenden maschinenbaulichen Aufwand, der einen zugehörigen Kostenaufwand zur Folge hat. Bei einer Verwendung von Transportdornen, die nicht durch die gesamte Maschine mit den Vorformlingen umlaufen, ist es darüber hinaus nach einem Abschluß des Heizvorganges erforderlich, die Dorne wieder aus den Vorformlingen herauszuziehen, so daß eine entsprechende Beschädigungsgefahr für die durch die Erhitzung weichen Vorformling resultiert.

Die im Mündungsbereich der Vorformlinge angeordneten Transportdorne verhindern darüber hinaus eine hocheffektive Kühlung des Mündungsbereiches der Vorformlinge während des Heizvorganges. Eine derartige Kühlung ist insbesondere bei einer Realisierung von Blasmaschinen mit sehr hohen Ausstoßraten vorteilhaft, da hier innerhalb einer kurzen Zeitspanne eine relativ hohe Energie in die zu beheizenden Bereiche der Vorformlinge eingebracht werden muß.

Der Mündungsbereich der Vorformlinge ist gleichzeitig vor einer Überhitzung zu schützen, da ansonsten Formveränderungen in einem typischerweise in diesem Bereich angebrachten Gewinde der Vorformlinge zu befürchten sind. Derartige Formveränderungen würden nach einem Befüllen der Behälter und dem Aufsetzen eines Verschlusses zu Undichtigkeiten führen. Darüber hinaus sind auch Rißbildungen im Mündungsbereich nicht völlig ausgeschlossen.

Aus der für den Verfahrens- und für den Systemanspruch gattungsbildenden EP 0 305 699 A ist es bereits bekannt, gemäss den Oberbegriffen der Ansprüche 1 und 19, einen Vorformling im Bereich einer Heizstrecke durch einen Kontakt mit Tragrollen in Rotation zu versetzen. Die Vorformlinge liegen hierbei mit ihren Stützringen auf Haltekragen der Rollen auf. Die Rollen werden durch einen außenseitig umlaufenden Treibriemen in eine gleichmäßige Rotation versetzt.

In der EP-A-0 713 758 wird eine Heizeinrichtung für Vorformlinge beschrieben, in der die Vorformlinge durch einen umlaufenden Treibriemen in eine Rotation versetzt werden, der die Vorformlinge unterhalb von deren Stützringen beaufschlagt.

Aus der US-A-4,451,426 ist es bekannt, einen Vorformling oberhalb seines eigentlichen Mündungsabschnittes mit einem Handhabungsabschnitt zu versehen, der eine außenseitige Verzahnung aufweist. In diese Verzahnung greift ein externes Zahnrad ein, um den Vorformling während dessen Beheizung in eine Rotationsbewegung zu versetzen. Der Handhabungsabschnitt des Vorformlings wird nach einer blastechnischen Umformung des Vorformlings in einen Behälter abgetrennt. Während seiner Beheizung wird der Vorformling von Tragrollen gehaltert.

Aufgabe der vorliegenden Erfindung ist es, ein Verfahren der einleitend genannten Art derart zu verbessern, daß mit geringem maschinenbaulichen Aufwand eine qualitativ hochwertige Beheizung bei gleichzeitig hohen Durchsatzraten unterstützt wird.

Diese Aufgabe wird erfindungsgemäß dadurch gelöst, daß der Vorformling mindestens entlang eines Teiles seines Transportweges durch die Heizstrecke hindurch mit einem Umfangsbereich seiner Oberfläche im Bereich eines Mündungsabschnittes direkt auf einer eine Rotationsbewegung des Vorformlings vorgebenden Bezugsfläche abrollt, wobei die Bezugsfläche als Rollenoberfläche von Rollen bereitgestellt wird und die Rollen von einer Transportkette miteinander verbunden werden, die in einer Transportrichtung angetrieben wird.

Weitere Aufgabe der vorliegenden Erfindung ist es, ein System der einleitend genannten Art derart zu konstruieren, daß hohe Durchsatzraten bei einfachem konstruktiven Aufbau unterstützt werden.

Diese Aufgabe wird erfindungsgemäß dadurch gelöst, daß entlang mindestens eines Teiles des Transportweges des Vorformlings durch die Heizstrecke hindurch eine Bezugsfläche angeordnet ist, die durch einen direkten Kontakt mit einem Umfangsbereich einer Oberfläche im Bereich eines Mündungsabschnittes des Vorformlings eine Rotationsbewegung des Vorformlings vorgibt und die derart relativ zum Vorformling positioniert ist, daß der Vorformling auf der Bezugsfläche abrollt und daß die Bezugsfläche als Oberfläche einer Rolle ausgebildet ist sowie daß die Rollen von einer Transportkette miteinander verbunden sind, die in einer Transportrichtung angetrieben ist.

Durch das Abrollen des Vorformlings auf der Bezugsfläche bei einem unmittelbaren Kontakt des Vorformlings mit der Bezugsfläche werden Hubbewegungen im Zusammenhang mit einem Ineinanderführen des Vorformlings und eines Transportdornes vermieden. Darüber hinaus kann bei einem Kontakt einer äußeren Oberfläche des Vorformlings mit der Bezugsfläche ein innerer Mündungsbereich des Vorformlings freigehalten werden. Der Begriff des Abrollens umfaßt auch ein Abwälzen oder vergleichbare Bewegungen.

Eine Umsetzung einer Translationsbewegung des Vorformlings in eine Rotationsbewegung kann dadurch erfolgen, daß der Vorformling an einer langgestreckt verlaufenden Fläche abrollt.

Zur Unterstützung eines aktiven Antriebes für die Durchführung einer Rotationsbewegung des Vorformlings ist auch daran gedacht, daß der Vorformling an einer Rollenoberfläche abrollt.

Eine besonders zuverlässige Generierung der Rotationsbewegung des Vorformlings kann dadurch erfolgen, daß eine die Rollenoberfläche tragende Rolle angetrieben wird.

Eine Vorgabe einer definierten Translationsbewegung des Vorformlings mit überlagerter Rotationsbewegung erfolgt dadurch, daß der Vorformling von einer Schiene und zwei Rollen geführt wird.

Ein einfacher Rotationsantrieb für die verwendeten Rollen kann dadurch bereitgestellt werden, daß die Rollen zur Bereitstellung eines Rollenantriebes auf einer Gegenschiene abrollen. Der Antrieb der Rollen kann reibschlüssig oder formschlüssig erfolgen. Ein Formschluß kann beispielsweise durch den Eingriff eines mit einer Achse der Rollen verbundenen Zahnrades in eine Zahnstange realisiert werden.

Zur Sicherstellung einer gleichmäßigen Bewegungsübertragung wird vorgeschlagen, daß mindestens eine der Rollen gegenüber dem Vorformling verspannt wird.

Für eine zuverlässige Rotationsvorgabe der Vorformlinge erweist es sich als ausreichend, daß in Transportrichtung hintereinander jede zweite Rolle relativ zum Vorformling aktiv verspannt wird.

Eine weitere Variante zur Sicherstellung einer ausreichenden Reibhaftung besteht darin, daß mindestens bereichsweise die Schiene gegenüber der Gegenschiene verspannt wird. Generell ist es möglich, eine Verspannung der Vorformlinge sowohl radial als auch axial zwischen den Rollen und der Schiene vorzusehen.

Gemäß einer Ausführungsvariante ist vorgesehen, daß die Vorformlinge im Bereich der Heizstrecke mit ihren Mündungsabschnitten in lotrechter Richtung nach oben orientiert beheizt werden.

Darüber hinaus ist auch daran gedacht, daß die Vorformlinge im Bereich der Heizstrecke mit ihren Mündungsabschnitten in lotrechter Richtung nach unten orientiert beheizt werden.

Zu einer preiswerten Fertigung der Vorrichtung trägt es bei, daß die Mündungsabschnitte der Vorformlinge während aller aufeinander folgenden Verfahrensschritte der Beheizung und der Blasformung auf einem im wesentlichen gleichen Höhenniveau transportiert werden.

Eine universelle Handhabung von Vorformlingen wird dadurch unterstützt, daß eine Rotationsbewegung der Vorformlinge durch einen Reibschluß zwischen den Rollen und der Oberfläche des Vorformlings vorgegeben wird.

Bei speziell geformten Vorformlingen ist es auch möglich, daß eine Rotationsbewegung der Vorformlinge durch einen Formschluß zwischen den Rollen und der Oberfläche des Vorformlings vorgegeben wird.

Zu einer einfachen konstruktiven Realisierung der Vorrichtung trägt es ebenfalls bei, daß die Vorformlinge im wesentlichen horizontal in die Heizstrecke einlaufen und aus der Heizstrecke entnommen werden.

Ein vergrößerter Freiraum bei der Prozeßoptimierung wird dadurch bereitgestellt, daß ein Innenbereich des Mündungsabschnittes während der Durchführung der Beheizung frei von Maschinenelementen gehalten wird.

Ein störungssicherer Vorformlingstransport wird dadurch unterstützt, daß die Vorformlinge im Bereich der Heizstrecke sowohl in Richtung einer Vorformlingslängsachse als auch in einer bezüglich der Vorformlingslängsachse radialen Richtung geführt werden.

Für standardmäßig gestaltete Vorformlinge erweist es sich als vorteilhaft, daß ein Stützring des Vorformlings entlang des Transportweges in mindestens einer nutförmigen Vertiefung geführt wird.

Eine besonders hohe Positioniergenauigkeit entlang des Transportweges durch die Heizstrecke kann dadurch erreicht werden, daß der Vorformling entlang seines Umfanges durch die Schiene und die Rollen an mindestens drei Stellen beaufschlagt wird.

Eine robuste und störungsunanfällige Konstruktion wird dadurch bereitgestellt, daß die Rollen von einer Transportkette miteinander verbunden werden.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine Draufsicht auf eine schematische Darstellung der Heizstrecke, bei der jeder Vorformling entlang des Heizbereiches von einer Längsführung und zwei rollenartigen Führungen beaufschlagt ist,
- Fig. 6: einen Querschnitt gemäß Schnittlinie VI-VI in Fig. 5,
- Fig. 7: eine perspektivische Darstellung der Heizeinrichtung gemäß Fig. 5,
- Fig. 8: eine vergrößerte perspektivische Darstellung der Einrichtung gemäß Fig. 7 im Bereich des Kettenrades,
- Fig. 9: eine Draufsicht auf ein mit drei Rollen versehenes zangenartiges Halteelement für einen Vorformling und
- Fig. 10: einen Querschnitt gemäß Schnittlinie X-X in Fig. 9.

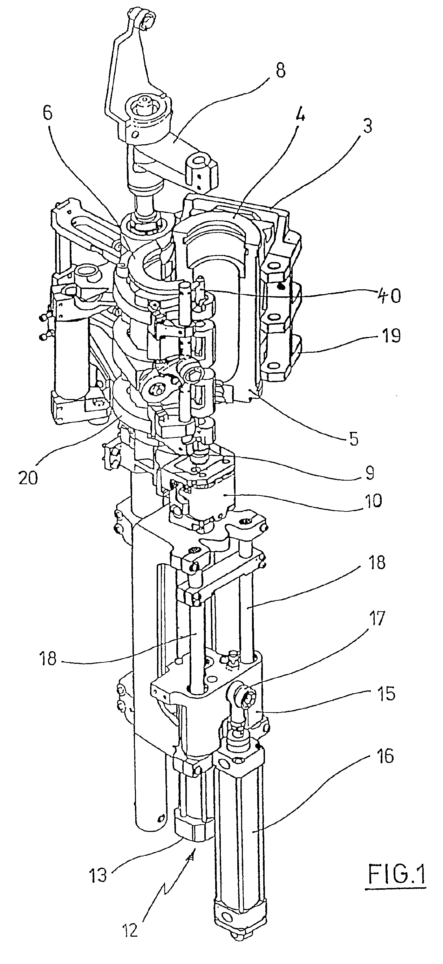

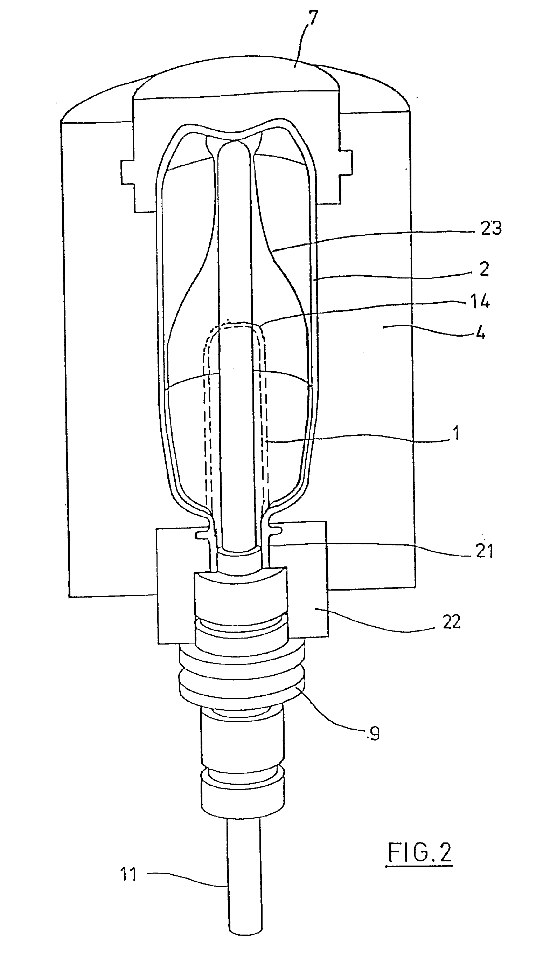

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

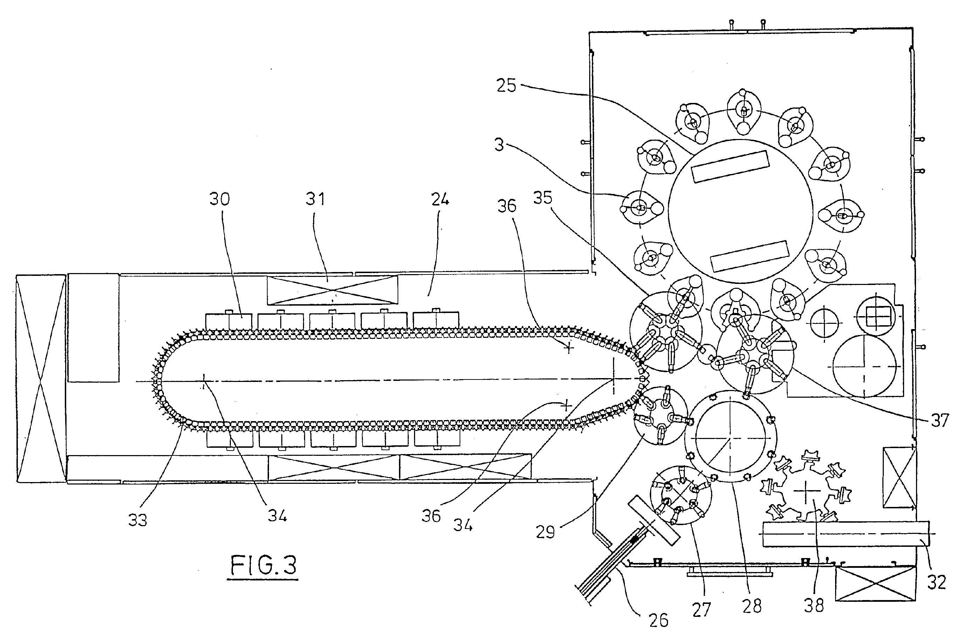

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benach-barten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

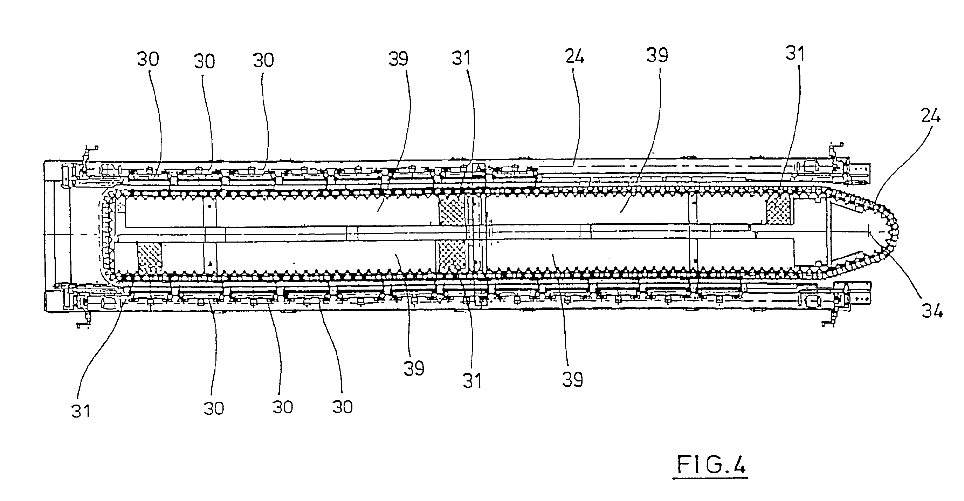

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

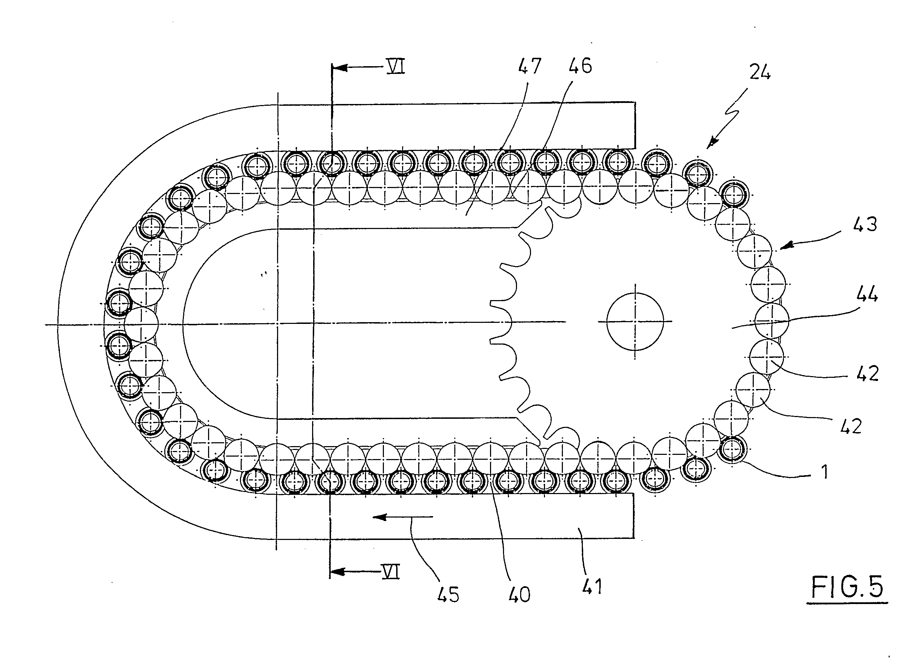

Fig. 5 zeigt eine Draufsicht auf die Heizstrecke (24). Es ist zu erkennen, daß die Vorformlinge (1) entlang eines Transportweges (14) durch die Heizstrecke (24) hindurch zwischen einer Schiene (41) und Rollen (42) geführt sind. Die Schiene (41) ist ortsfest und stationär angeordnet. Die Rollen (42) sind zu einer Transportkette (43) miteinander verbunden und die Transportkette (43) ist über ein Kettenrad (44) geführt.

Die Rollen (42) sind derart angeordnet, daß jeweils zwei Rollen (42) einen Vorformling (1) beaufschlagen. Unter Berücksichtigung der Schiene (41) liegt somit für jeden Vorformling (1) eine Dreipunktführung vor, wobei hierdurch begrifflich auch eine Führung entlang von drei Kontaktlinien umfaßt ist.

Bei einer Vorwärtsbewegung der Transportkette (43) in einer Transportrichtung (45) wälzen sich die Rollen (42) auf einer Oberfläche (46) einer Gegenschiene (47) ab. Die Gegenschiene (47) erstreckt sich im wesentlichen beabstandet und parallel zur Schiene (41). Eine Bewegung der Transportkette (43) wird durch eine Rotation des angetriebenen Kettenrades (44) vorgegeben.

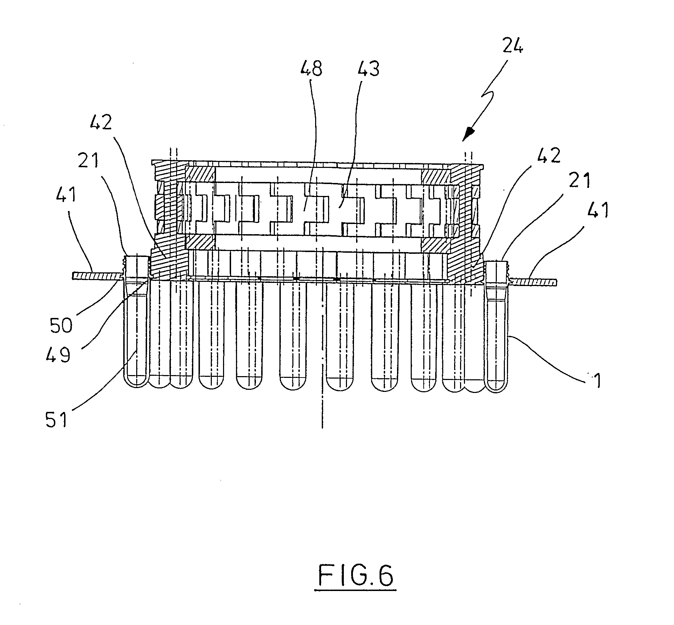

Fig. 6 veranschaulicht in einer Querschnittdarstellung insbesondere den Aufbau der Transportkette (43). Es ist zu erkennen, daß die Transportkette (43) aus einzelnen Kettengliedern (48) ausgebildet ist, die beweglich miteinander verbunden sind. Die Rollen (42) beaufschlagen beim dargestellten Ausführungsbeispiel die Vorformlinge (1) im Bereich derer Mündungsabschnitte (21). Durch eine Rotation der Rollen (42) und einen Andruck der Rollen (42) gegen die Mündungsabschnitte (21) werden auch die Vorformlinge (1) in Rotation versetzt. Im Bereich der Schienen (41) sind die Vorformlinge (1) derart mit Stützringen (49) geführt, daß die Stützringe (49) in nutartige Vertiefungen (50) der Schienen (41) eingreifen. Es erfolgt hierdurch eine Führung der Vorformlinge (1) in Richtung von Vorformlingslängsachse (51).

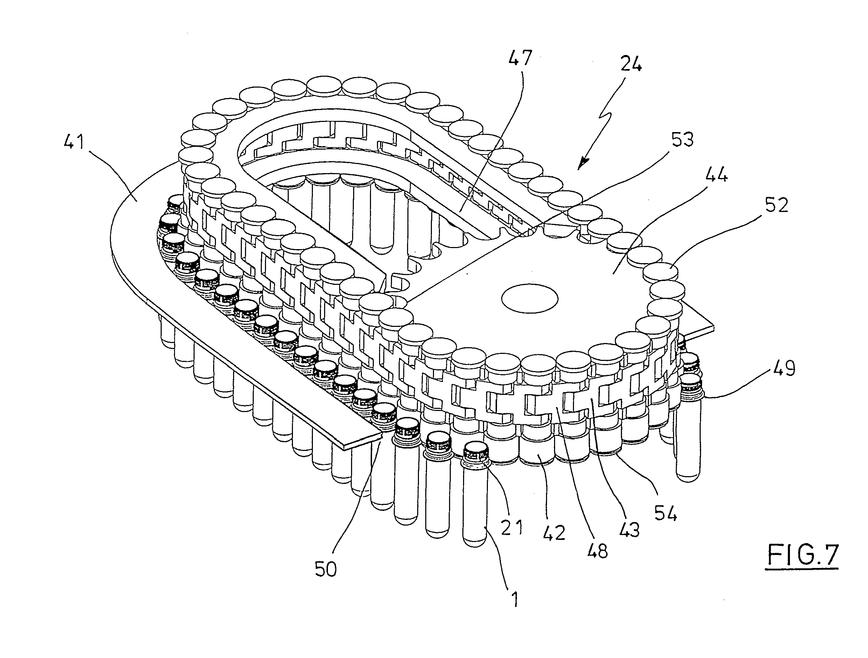

Aus Fig. 6 ist insbesondere zu erkennen, daß der Mündungsabschnitt (21) innenseitig frei bleibt. Die perspektivische Darstellung in Fig. 7 veranschaulicht nochmals den Aufbau der Transportkette (43) sowie die Führung der Vorformlinge (1) im Bereich der Heizstrecke (24).

Es ist insbesondere zu erkennen, daß die Vorformlinge ohne Durchführung von Hubbewegungen in horizontaler Richtung in die Heizstrecke (24) einlaufen und auch wieder in horizontaler Richtung aus der Heizstrecke (24) entnommen werden. Zur Unterstützung eines Eingriffes der Transportkette (43) in das Kettenrad (44) ist die Transportkette (43) mit runden Profilelementen (42) versehen, die an eine Verzahnung (53) des Kettenrades (44) angepaßt ausgebildet sind.

Zur Vereinfachung sind die in Fig. 3 und Fig. 4 skizzierten Heizstrahler (30) in den Fig. 5 bis 8 nicht dargestellt. Bei den dargestellten Ausführungsbeispielen würden die Heizstrahler (30) unterhalb der Schiene (41) positioniert werden. Innenliegend und gegenüber zu den Heizstrahlern (30) werden Reflektoren oder gegebenenfalls weitere Heizstrahler (30) positioniert. Alternativ zum dargestellten Transport der Vorformlinge (1) mit ihren Mündungsabschnitten (21) in lotrechter Richtung nach oben ist es ebenfalls ohne weiteres möglich, einen Transport und eine Beheizung der Vorformlinge (1) mit ihren Mündungsabschnitten in lotrechter Richtung nach unten orientiert vorzunehmen. Bei einer derartigen Ausführungsform würden die Heizstrahler (30) oberhalb der Führungsschiene (41) angeordnet werden.

Zur Vermeidung einer unerwünschten Erwärmung der Mündungsabschnitte (21) der Vorformlinge (1) ist daran gedacht, während der Beheizung Kühlluft in Richtung auf die Mündungsabschnitte (21) zu leiten. Beim dargestellten Ausführungsbeispiel erweist es sich als besonders vorteilhaft, die Kühlluft in lotrechter Richtung von oben nach unten gegen die Mündungsabschnitte (21) zu richten. Alternativ oder ergänzend können aber auch andere Strömungsrichtungen realisiert werden.

Fig. 7 veranschaulicht ebenfalls, daß die Rollen (42) mit einem Rollenprofil (54) versehen sind, das als nutartige Vertiefung ausgebildet ist. Das Rollenprofil (54) ist ähnlich wie die Vertiefung (50) im Bereich der Schiene (41) an die Dimensionierung des Stützringes (49) angepaßt ausgebildet. Hierdurch wird auch im Bereich der Rollen (42) eine Führung der Vorformlinge (1) in Richtung der Vorformlingslängsachse (51) bereitgestellt.

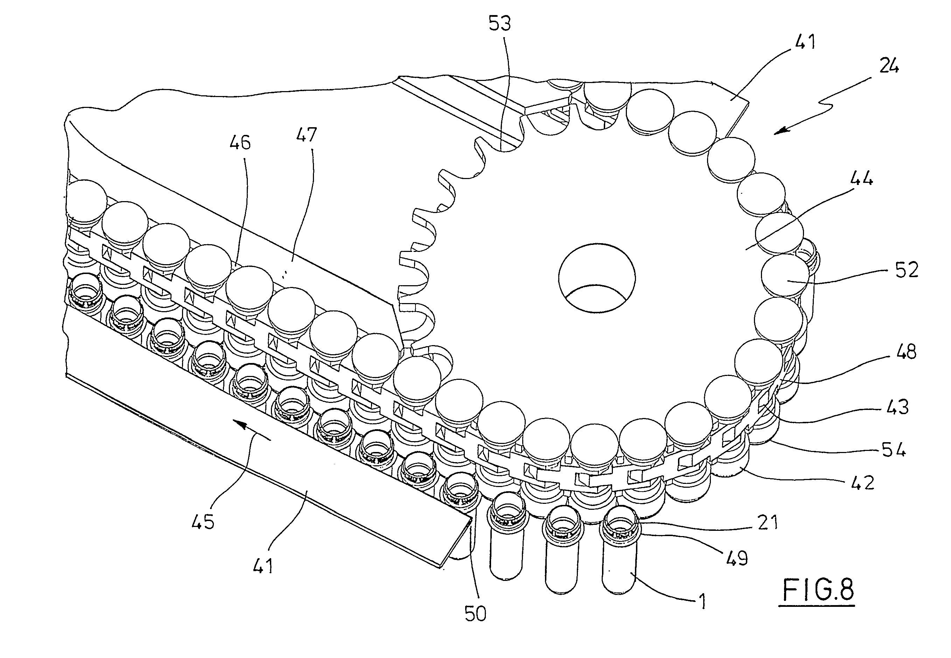

Fig. 8 veranschaulicht in einer weiteren perspektivischen Darstellung das Zusammenwirken der Führungsschiene (41), der Vorformlinge (1) und der Rollen (42). Zur Sicherstellung einer Rotationsbewegung der Vorformlinge (1) sind unterschiedliche Ausführungsvarianten denkbar. In der Regel ist es völlig ausreichend, die Rollen aufgrund der Zugspannung innerhalb der Transportkette (43) auf der Gegenschiene abrollen zu lassen und einen Kontakt zwischen den Rollen (42) und den Vorformlingen (1) aufgrund der von den Rollen (42) auf die Vorformlinge (1) ausgeübten Vorschubkräften zu realisieren.

Darüber hinaus ist es aber auch möglich, eine Verspannung der Rollen (42) gegenüber den Vorformlingen (1) zu realisieren und hierdurch eine ausreichende Reibhaftung bereitzustellen. Der Kontakt zwischen den Vorformlingen (1) und den Rollen (42) kann darüber hinaus durch eine günstige Materialauswahl der Rollen (42) vorteilhaft beeinflußt werden. Gemäß einer weiteren Ausführungsvariante ist es auch denkbar, die Gegenschiene (47) aus einzelnen Segmenten auszubilden, die relativ zur Schiene (41) federnd verspannt werden. Die Vorformlinge (1) und die Rollen (42) werden hierdurch zwischen den Schienen (41, 47) vorgebbar eingespannt. Alternativ kann ebenfalls eine segmentartige Ausbildung der Schiene (41) realisiert werden.

Ebenfalls ist daran gedacht, durch eine geeignete Oberflächengestaltung der Vorformlinge (1) und der Rollen (42) für einen Formschluß und somit für einen zahnradartigen Kontakt zu sorgen.

Alternativ zur dargestellten abrollenden oder abwälzenden Beaufschlagung der Vorformlinge (1) im Bereich einer äußeren Oberfläche ist es grundsätzlich auch möglich, einen entsprechenden rollenden Kontakt im Bereich einer inneren Oberfläche, vorzugsweise im Bereich des Mündungsabschnittes (21), bereitzustellen. Hierdurch würde allerdings der Vorteil eines innen freien Mündungsabschnittes (21) nicht erreicht werden können.

Als Material für die Schienen (41, 47), die Kettenglieder (48) sowie die Rollen (42) können sowohl Metalle als auch Kunststoffe oder elastomere Materialien verwendet werden. Die konkrete Materialauswahl erfolgt hierbei unter Berücksichtigung der erforderlichen thermischen Festigkeit sowie der mechanischen Belastbarkeit und unter Berücksichtigung konkreter Verschleißanforderungen.

Bei einer Verspannung der Rollen (42) relativ zu den Vorformlingen (1) ist es in der Regel ausreichend, jede zweite der Rollen (42) gegenüber den Vorformlingen (1) zu verspannen. Aufgrund der Anordnung der Rollen (42) relativ zueinander drückt hierbei die aktiv verspannte Rolle den Vorformling (1) auch gegen die nicht verspannte Rolle, so daß insgesamt eine Verspannung aller den Vorformlingen beaufschlagenden Bauelemente relativ zum Vorformling (1) erreicht wird.

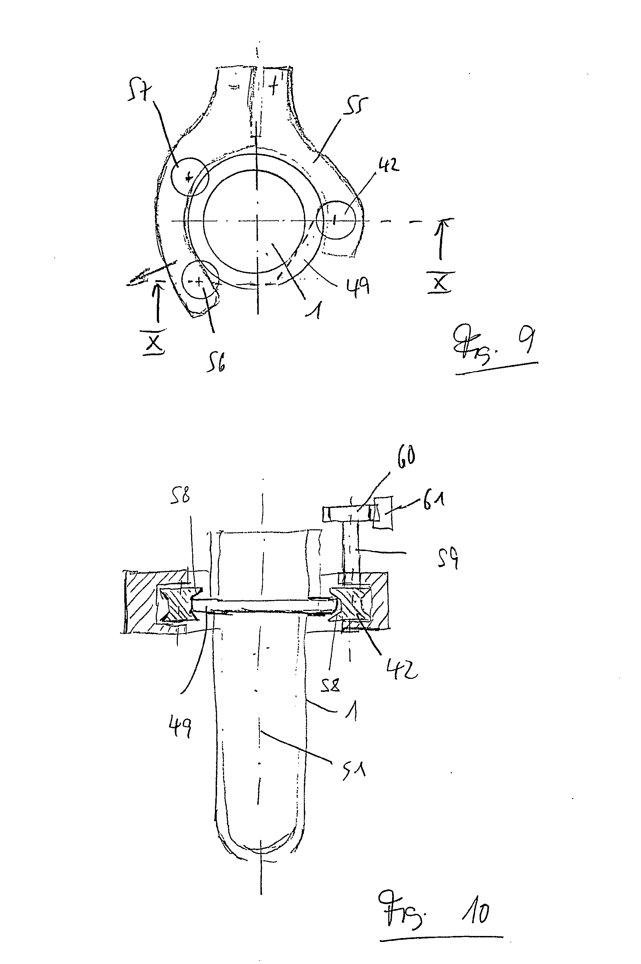

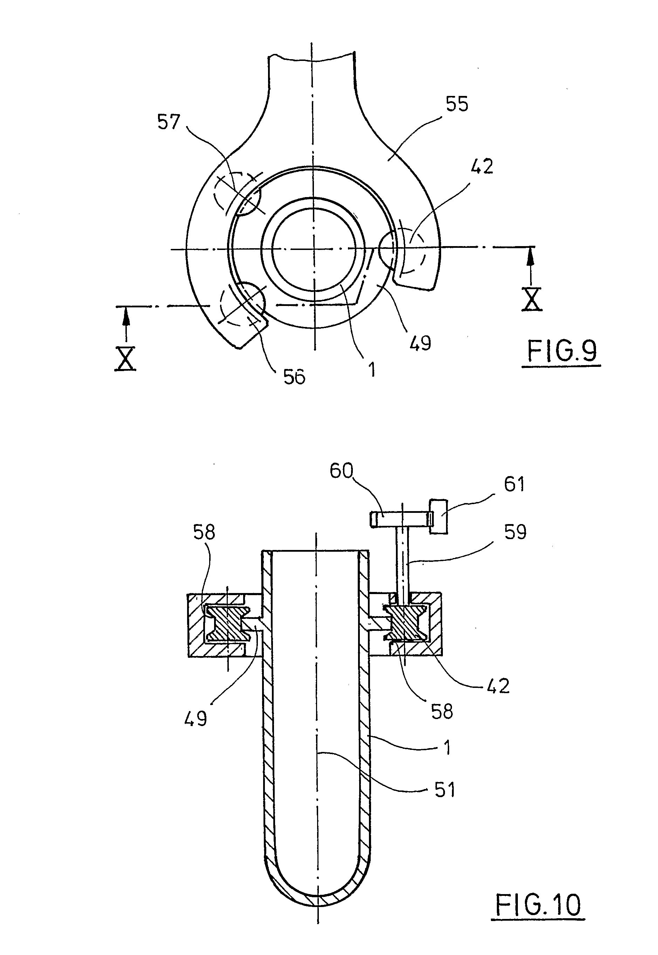

Gemäß der Ausführungsform in Fig. 9 wird der Vorformling (1) von einem Tragelement (55) gehaltert, das mit einer angetriebenen Rolle (42) und zwei Gegenrollen (56, 57) versehen ist. Die Rollen haltern den Vorformling (1) im Bereich des Stützrings (49).

Fig. 10 veranschaulicht in einem Querschnitt die Konstruktion in weiteren Details. Es ist zu erkennen, daß die Rollen (42, 56, 57) ein nutartiges Umfangsprofil (58) aufweisen, in das der Stützring (49) eingreift. Hierdurch ist eine Verschiebung des Vorformlings (1) in Richtung der Vorformlingslängsachse (51) ausgeschlossen.

Die angetriebene Rolle (42) ist über eine Welle (59) mit einem Antriebsrad (60) verbunden. Das Antriebsrad (60) kann beispielsweise als ein Zahnrad ausgebildet sein, das in ein stationäres Profilelement (61) eingreift. Das Profilelement (61) kann beispielsweise als Zahnstange oder als Kette realisiert sein.

Bei einer Bewegung des Vorformlings (1) entlang des Transportweges (40) rollt das Antriebsrad (60) im Profilelement (61) ab und verursacht hierdurch eine Rotationsbewegung der Rolle (42) und damit eine Rotationsbewegung des Vorformlings (1).

Die Tragelemente (55) können ähnlich zur Grundkonstruktion in Fig. 7 an Kettengliedern (48) befestigt sein, die eine Transportkette (53) ausbilden und entlang des Transportweges (40) geführt sind.

## Patentansprüche

1. Verfahren zur Blasformung von Behältern (2), bei dem ein Vorformling (1) aus einem thermoplastischem Material nach einer thermischen Konditionierung entlang eines Transportweges (40) im Bereich einer Heizstrecke (24) innerhalb einer Blasform (4) durch Blasdruckeinwirkung in den Behälter (2) umgeformt wird, **dadurch gekennzeichnet, daß** der Vorformling (1) mindestens entlang eines Teiles seines Transportweges (40) durch die Heizstrecke (24) hindurch mit einem Umfangsbereich seiner Oberfläche im Bereich eines Mündungsabschnittes (21) direkt auf einer eine Rotationsbewegung des Vorformlings (1) vorgebenden Bezugsfläche abrollt, wobei die Bezugsfläche als Rollenoberfläche von Rollen (42) bereitgestellt wird und die Rollen (42) von einer Transportkette (43) miteinander verbunden werden, die in einer Transportrichtung (45) angetrieben wird.

2. Verfahren nach Anspruch 1, **dadurch gekennzeichnet, daß** der Vorformling (1) an einer langgestreckt verlaufenden Fläche abrollt.

3. Verfahren nach Anspruch 1, **dadurch gekennzeichnet, daß** eine die Rollenoberfläche tragende Rolle (42) angetrieben wird.

4. Verfahren nach einem der Ansprüche 1 bis 3, **dadurch gekennzeichnet, daß** der Vorformling (1) von einer Schiene (41) und zwei Rollen (42) geführt wird.

5. Verfahren nach einem der Ansprüche 1 bis 4, **dadurch gekennzeichnet, daß** die Rollen (42) zur Bereitstellung eines Rollenantriebes auf einer Gegenschiene (47) abrollen.

6. Verfahren nach einem der Ansprüche 1 bis 5, **dadurch gekennzeichnet, daß** mindestens eine der Rollen (42) gegenüber dem Vorformling (1) verspannt wird.

7. Verfahren nach Anspruch 6, **dadurch gekennzeichnet, daß** in Transportrichtung (45) hintereinander jede zweite Rolle (42) relativ zum Vorformling (1) aktiv verspannt wird.

8. Verfahren nach Anspruch 4 und 5, **dadurch gekennzeichnet, daß** mindestens bereichsweise die Schiene (41) gegenüber der Gegenschiene (47) verspannt wird.

9. Verfahren nach einem der Ansprüche 1 bis 8, **dadurch gekennzeichnet, daß** die Vorformlinge (1) im Bereich der Heizstrecke (24) mit ihren Mündungsabschnitten (21) in lotrechter Richtung nach oben orientiert beheizt werden.

10. Verfahren nach einem der Ansprüche 1 bis 8, **dadurch gekennzeichnet, daß** die Vorformlinge (1) im Bereich der Heizstrecke (24) mit ihren Mündungsabschnitten (21) in lotrechter Richtung nach unten orientiert beheizt werden.

11. Verfahren nach einem der Ansprüche 1 bis 10, **dadurch gekennzeichnet, daß** die Mündungsabschnitte (21) der Vorformlinge (1) während aller aufeinander folgenden Verfahrensschritte der Beheizung und der Blasformung auf einem im wesentlichen gleichen Höhenniveau transportiert werden.

12. Verfahren nach einem der Ansprüche 1 bis 11, **dadurch gekennzeichnet, daß** eine Rotationsbewegung der Vorformlinge (1) durch einen Reibschluß zwischen den Rollen (42) und der Oberfläche des Vorformlings vorgegeben wird.

13. Verfahren nach einem der Ansprüche 1 bis 11, **dadurch gekennzeichnet, daß** eine Rotationsbewegung der Vorformlinge (1) durch einen Formschluß zwischen den Rollen (42) und der Oberfläche des Vorformlings vorgegeben wird.

14. Verfahren nach einem der Ansprüche 1 bis 13, **dadurch gekennzeichnet, daß** die Vorformlinge (1) im wesentlichen horizontal in die Heizstrecke (24) einlaufen und aus der Heizstrecke (24) entnommen werden.

15. Verfahren nach einem der Ansprüche 1 bis 14, **dadurch gekennzeichnet, daß** ein Innenbereich des Mündungsabschnittes (21) während der Durchführung der Beheizung frei von Maschinenelementen gehalten wird.

16. Verfahren nach einem der Ansprüche 1 bis 15, **dadurch gekennzeichnet, daß** die Vorformlinge (1) im Bereich der Heizstrecke (24) sowohl in Richtung einer Vorformlingslängsachse (51) als auch in einer bezüglich der Vorformlingslängsachse (51) radialen Richtung geführt werden.

17. Verfahren nach einem der Ansprüche 1 bis 16, **dadurch gekennzeichnet, daß** ein Stützring des Vorformlings (1) entlang des Transportweges (40) in mindestens einer nutförmigen Vertiefung geführt wird.

18. herfahren nach Anspruch 4, **dadurch gekennzeichnet, daß** der Vorformling (1) entlang seines Umfanges durch die Schiene (41) und die Rollen (42) an mindestens drei Stellen beaufschlagt wird.

19. System zur Blasformung von Behältern (2) aus einem thermoplastischen Material, das mindestens eine Vorrichtung zur Blasformung mit entlang eines Transportweges (40) eines Vorformlings (1) angeordneter Heizstrecke (24) und eine mit einer Blasform (4) versehene Blasstation (3) aufweist sowie mindestens einen Vorformling (1), und bei dem die Blasstation (3) an eine mit einer Blasgassteuerung versehene Blasgaszuführung angeschlossen ist, **dadurch gekennzeichnet, daß** entlang mindestens eines Teiles des Transportweges (40) des Vorformlings (1) durch die Heizstrecke (24) hindurch eine Bezugsfläche angeordnet ist, die durch einen direkten Kontakt mit einem Umfangsbereich einer Oberfläche im Bereich eines Mündungsabschnittes (21) des Vorformlings (1) eine Rotationsbewegung des Vorformlings (1) vorgibt und die derart relativ zum Vorformling (1) positioniert ist, daß der Vorformling (1) auf der Bezugsfläche abrollt und dass die Bezugsfläche als Oberfläche einer Rolle (42) ausgebildet ist sowie dass die Rollen (42) von einer Transportkette (43) miteinander verbunden sind, die in einer Transportrichtung (45) angetrieben ist.

20. System nach Anspruch 19, **dadurch gekennzeichnet, daß** die Rolle (42) angetrieben ist.

21. System nach einem der Ansprüche 19 oder 20, **dadurch gekennzeichnet, daß** jeder Vorformling (1) zur Führung von einer Schiene (41) sowie zwei Rollen (42) beaufschlagt ist.

22. System nach einem der Ansprüche 19 bis 21, **dadurch gekennzeichnet, daß** die Rollen (42) durch ein Abrollen auf einer Gegenschiene (47) angetrieben sind.

23. System nach einem der Ansprüche 19 bis 22, **dadurch gekennzeichnet, daß** mindestens eine der Rollen (42) relativ zu den Vorformlingen (1) verspannt angeordnet ist.

24. System nach Anspruch 23, **dadurch gekennzeichnet, daß** entlang des Transportweges (40) jede zweite der Rollen (42) aktiv gegenüber den Vorformlingen (1) verspannt angeordnet ist.

25. System nach Anspruch 21 und 22, **dadurch gekennzeichnet, daß** die Schienen (41) und die Gegenschienen (47) mindestens bereichsweise relativ zueinander verspannt angeordnet sind.

26. System nach einem der Ansprüche 19 bis 25, **dadurch gekennzeichnet, daß** die Heizstrecke (24) zu einer Beheizung von Vorformlingen ausgebildet ist, die mit ihren Mündungen in lotrechter Richtung nach oben positioniert angeordnet sind.

27. System nach einem der Ansprüche 19 bis 25, **dadurch gekennzeichnet, daß** die Heizstrecke (24) zu einer Beheizung von Vorformlingen ausgebildet ist, die mit ihren Mündungen in lotrechter Richtung nach unten positioniert angeordnet sind.

28. System nach einem der Ansprüche 19 bis 27, **dadurch gekennzeichnet, daß** sowohl im Bereich der Heizstrecke (24) als auch im Bereich einer Blasverformung der Vorformlinge (1) alle Führungselemente für die Vorformlinge (1) zur Vorgabe eines im wesentlichen gleichbleibenden Höhenniveaus der Vorformlinge (1) angeordnet sind.

29. System nach einem der Ansprüche 19 bis 28, **dadurch gekennzeichnet, daß** die Rollen (42) relativ zum Vorformling (1) einen Reibschluß aufweisen.

30. System nach einem der Ansprüche 19 bis 28, **dadurch gekennzeichnet, daß** die Rollen (42) relativ zum Vorformling (1) einen Formschluß aufweisen.

31. System nach einem der Ansprüche 19 bis 30,**dadurch gekennzeichnet, daß** sowohl im Bereich einer Eingabe der Vorformlinge (1) in die Heizstrecke (24) als auch im Bereich einer Ausgabe der Vorformlinge (1) aus der Heizstrecke (24) eine im wesentlichen horizontale Führung der Vorformlinge (1) angeordnet ist.

32. System nach einem der Ansprüche 19 bis 31, **dadurch gekennzeichnet, daß** die Vorformlinge entlang der Heizstrecke (34) mit einem innenseitig im wesentlichen von Bauelementen der Heizstrecke (24) freien Mündungsabschnitt (21) transportiert sind.

33. System nach einem der Ansprüche 19 bis 32, **dadurch gekennzeichnet, daß** die Vorformlinge entlang der Heizstrecke (24) sowohl von einer axialen als auch von einer radialen Führung beaufschlagt sind.

34. System nach einem der Ansprüche 19 bis 33, **dadurch gekennzeichnet, daß** Stützringe (49) der Vorformlinge (1) entlang der Heizstrecke (24) mindestens bereichsweise in Richtung einer Vorformlingslängsachse (51) geführt angeordnet sind.

35. System nach einem der Ansprüche 19 bis 34, **dadurch gekennzeichnet, daß** jeder Vorformling (1) entlang der Heizstrecke (24) an mindestens drei Stellen seiner Oberfläche geführt ist, die entlang einer Umfangsrichtung des Vorformlings (1) beabstandet angeordnet sind.

36. System nach einem der Ansprüche 19 bis 35, **dadurch gekennzeichnet, daß** die Rolle (42) von einem Tragelement (55) gelagert ist.

37. System nach Anspruch 36, **dadurch gekennzeichnet, daß** das Tragelement (55) drei Rollen (42, 56, 57) zur Halterung des Vorformlings (1) trägt.

38. System nach Anspruch 36 oder 37, **dadurch gekennzeichnet, daß** nur eine der Rollen (42, 56, 57) angetrieben ist.

39. System nach einem der Ansprüche 36 bis 38, **dadurch gekennzeichnet, daß** die angetriebene Rolle (42) über eine Welle (59) mit einem Antriebsrad (60) verbunden ist.

40. System nach einem der Ansprüche 36 bis 39, **dadurch gekennzeichnet, daß** das Antriebsrad (60) auf einem Profilelement (61) abrollt.

## Claims

1. A method for the blow moulding of containers (2) wherein, after having been conditioned thermally along a transport path (40) in the area of a heating section (24), a preform (1) made of a thermoplastic material is moulded in a blow mould (4) by the action of blowing pressure to form the container (2),
**characterised in that**
- the preform (1) directly rolls over a reference surface with a circumferential area of its surface in the vicinity of an outlet section (21) at least along a part of its transport path (40) through the heating section (24), said reference surface determining a rotational movement of the preform (1), wherein the reference surface is provided as a roller surface of rollers (42) and the rollers (42) are connected to each other by a transport chain (43) which is driven in a transport direction (45).

2. The method according to Claim 1, **characterised in that** the preform (1) rolls over a surface that extends in an elongated manner.

3. The method according to Claim 1, **characterised in that** a roller (42) is driven, said roller (42) bearing the roller surface.

4. The method according to any one of Claims 1 to 3, **characterised in that** the preform (1) is guided by a bar (41) and two rollers (42).

5. The method according to any one of Claims 1 to 4, **characterised in that** the rollers (42) roll over a counter bar (47) in order to provide a roller drive.

6. The method according to any one of Claims 1 to 5, **characterised in that** at least one of the rollers (42) is braced in relation to the preform (1).

7. The method according to Claim 6, **characterised in that** every second roller (42) is actively braced in relation to the preform (1) one after the other in transport direction (45).

8. The method according to Claims 4 and 5, **characterised in that** the bar (41) is braced in relation to the counter bar (47) at least in certain regions.

9. The method according to any one of Claims 1 to 8, **characterised in that** the preforms (1) are heated in the area of the heating section (24) with their outlet sections (21) being oriented upwards in vertical direction.

10. The method according to any one of Claims 1 to 8, **characterised in that** the preforms (1) are heated in the area of the heating section (24) with their outlet sections (21) being oriented downwards in vertical direction.

11. The method according to any one of Claims 1 to 10, **characterised in that** the outlet sections (21) of the preforms (1) are transported at a height level that is essentially the same during all consecutive procedural steps of heating and blow moulding.

12. The method according to any one of Claims 1 to 11, **characterised in that** a rotational movement of the preforms (1) is determined by a friction fit between the rollers (42) and the surface of the preform.

13. The method according to any one of Claims 1 to 11, **characterised in that** a rotational movement of the preforms (1) is determined by a form fit between the rollers (42) and the surface of the preform.

14. The method according to any one of Claims 1 to 13, **characterised in that** the preforms (1) run into the heating section (24) and are taken out of the heating section (24) in an essentially horizontal direction.

15. The method according to any one of Claims 1 to 14, **characterised in that** an interior region of the outlet section (21) is kept free from machine elements while heating is in progress.

16. The method according to any one of Claims 1 to 15, **characterised in that** the preforms (1) are guided in the area of the heating section (24) both in the direction of a longitudinal preform axis (51) and in a direction that is radial with reference to the longitudinal preform axis (51).

17. The method according to any one of Claims 1 to 16, **characterised in that** a support ring of the preform (1) is guided in at least one groove-shaped recess along the transport path (40).

18. The method according to Claim 4, **characterised in that** the preform (1) is acted upon by the bar (41) and the rollers (42) at at least three points along its circumference.

19. A system for the blow moulding of containers (2) made of a thermoplastic material, said system comprising at least one device for blow moulding that has a heating section (24) arranged along a transport path (40) of a preform (1) and said system comprising a blowing station (3) provided with a blow mould (4) and said system comprising at least one preform (1), and wherein the blowing station (3) is connected to a blowing gas supply unit that is provided with a blowing gas control unit, **characterised in that** a reference surface is arranged along at least a part of the transport path (40) of the preform (1) through the heating section (24), said reference surface determining a rotational movement of the preform (1) by having direct contact with a circumferential area of a surface in the vicinity of an outlet section (21) of the preform (1) and being positioned in relation to the preform (1) such that the preform (1) rolls over the reference surface and that the reference surface is formed as the surface of a roller (42) and that the rollers (42) are connected to each other by a transport chain (43) which is driven in a transport direction (45).

20. The system according to Claim 19, **characterised in that** the roller (42) is driven.

21. The system according to any one of Claims 19 or 20, **characterised in that**, to be guided, each preform (1) is acted upon by a bar (41) as well as two rollers (42).

22. The system according to any one of Claims 19 to 21, **characterised in that** the rollers (42) are driven by rolling over a counter bar (47).

23. The system according to any one of Claims 19 to 22, **characterised in that** at least one of the rollers (42) is arranged such that it is braced in relation to the preforms (1).

24. The system according to Claim 23, **characterised in that** every second roller (42) is actively braced in relation to the preform (1) along the transport path (40).

25. The system according to Claims 21 and 22, **characterised in that** the bars (41) and the counter bars (47) are braced in relation to each other at least in certain regions.

26. The system according to any one of Claims 19 to 25, **characterised in that** the heating section (24) is formed for heating preforms that are arranged such that their outlets are positioned upwards in vertical direction.

27. The system according to any one of Claims 19 to 25, **characterised in that** the heating section (24) is formed for heating preforms that are arranged such that their outlets are positioned downwards in vertical direction.

28. The system according to any one of Claims 19 to 27, **characterised in that**, both in the area of the heating section (24) and in the area of a blow forming of the preforms (1), all guide elements for the preforms (1) are arranged for the determination of a height level of the preforms (1) that remains essentially the same.

29. The system according to any one of Claims 19 to 28, **characterised in that** the rollers (42) comprise a friction fit in relation to the preform (1).

30. The system according to any one of Claims 19 to 28, **characterised in that** the rollers (42) comprise a form fit in relation to the preform (1).

31. The system according to any one of Claims 19 to 30, **characterised in that**, both in the vicinity of an input of the preforms (1) into the heating section (24) and in the vicinity of an output of the preforms (1) out of the heating section (24), a guide of the preforms (1) is arranged that is essentially horizontal.

32. The system according to any one of Claims 19 to 31, **characterised in that** the preforms are transported along the heating section (34) with an outlet section (21) that is essentially free from components of the heating section (24) on its inner side.

33. The system according to any one of Claims 19 to 32, **characterised in that** the preforms are acted upon both by an axial guide and a radial guide along the heating section (24).

34. The system according to any one of Claims 19 to 33, **characterised in that**, along the heating section (24), support rings (49) of the preforms (1) are arranged such that they are guided in the direction of a longitudinal preform axis (51) at least in certain regions.

35. The system according to any one of Claims 19 to 34, **characterised in that** each preform (1) is guided along the heating section (24) at at least three points of its surface, said points being arranged such that they are spaced apart along a circumferential direction of the preform (1).

36. The system according to any one of Claims 19 to 35, **characterised in that** the roller (42) is supported by a carrying element (55).

37. The system according to Claim 36, **characterised in that** the carrying element (55) carries three rollers (42, 56, 57) for holding the preform (1).

38. The system according to Claim 36 or 37, **characterised in that** only one of the rollers (42, 56, 57) is driven.

39. The system according to any one of Claims 36 to 38, **characterised in that** the driven roller (42) is connected to a drive pulley (60) via a shaft (59).

40. The system according to any one of Claims 36 to 39, **characterised in that** the drive pulley (60) rolls over a profile element (61).

## Revendications

1. Procédé de moulage par soufflage de récipients (2), dans le cadre duquel une préforme (1) en un matériau thermoplastique, après un conditionnement thermique le long d'un parcours (40) dans une zone de chauffage (24), est transformée en un récipient (2) à l'intérieur d'un moule de soufflage (4) sous l'action d'une pression de soufflage, **caractérisé en ce que,** le long d'au moins une partie de son parcours (40) à travers la zone de chauffage (24), la préforme (1), avec une zone périphérique de sa surface située au niveau de la section d'embouchure (21), roule directement contre une surface de référence qui imprime un mouvement de rotation à la préforme (1), la surface de référence étant constituée par la surface de galets (42) et les galets (42) étant reliés entre eux par une chaîne de transport (43) entraînée selon une direction de transport (45).

2. Procédé selon la revendication 1, **caractérisé en ce que** la préforme (1) roule contre une surface allongée.

3. Procédé selon la revendication 1, **caractérisé en ce qu'**un galet (42) constituant la surface de déroulement est un galet moteur.

4. Procédé selon l'une des revendications 1 à 3, **caractérisé en ce que** la préforme (1) est guidée par un rail (41) et deux galets (42).

5. Procédé selon l'une des revendications 1 à 4, **caractérisé en ce que** les galets (42) roulent contre un contre-rail (47) pour assurer un entraînement par les galets.

6. Procédé selon l'une des revendications 1 à 5, **caractérisé en ce que** l'un au moins des galets (42) peut être serré contre la préforme (1).

7. Procédé selon la revendication 6, **caractérisé en ce que** chaque deuxième galet (42) dans le sens du transport (45) est activement serré contre la préforme (1).

8. Procédé selon les revendications 4 et 5, **caractérisé en ce qu**'une section au moins du rail (41) est serrée par rapport au contre-rail (47).

9. Procédé selon l'une des revendications 1 à 8, **caractérisé en ce que,** dans la zone de chauffage (24), les préformes (1) sont chauffées en étant placées verticalement avec leur section d'embouchure (21) orientée vers le haut.

10. Procédé selon l'une des revendications 1 à 8, **caractérisé en ce que**, dans la zone de chauffage (24), les préformes (1) sont chauffées en étant placées verticalement avec leur section d'embouchure (21) orientée vers le bas.

11. Procédé selon l'une des revendications 1 à 10, **caractérisé en ce que** les sections d'embouchure (21) des préformes (1), pendant toutes les étapes successives du chauffage et du moulage par soufflage, sont transportées à un niveau de hauteur essentiellement identique.

12. Procédé selon l'une des revendications 1 à 11, **caractérisé en ce qu'**un mouvement de rotation est imprimé aux préformes (1) par friction entre les galets (42) et la surface des préformes.

13. Procédé selon l'une des revendications 1 à 11, **caractérisé en ce qu'**un mouvement de rotation est imprimé aux préformes (1) par complémentarité de formes entre les galets (42) et la surface des préformes.

14. Procédé selon l'une des revendications 1 à 13, **caractérisé en ce que** les préformes (1) pénètrent dans la zone de chauffage (24) et en sont à nouveau retirées en position essentiellement horizontale.

15. Procédé selon l'une des revendications 1 à 14, **caractérisé en ce que**, pendant le chauffage, une zone intérieure de la section d'embouchure (21) est laissée libre de tout élément de la machine.

16. Procédé selon l'une des revendications 1 à 15, **caractérisé en ce que**, dans la zone de chauffage (24), les préformes (1) sont guidées aussi bien en direction d'un axe longitudinal (51) de la préforme que selon une direction radiale par rapport à l'axe longitudinal (51) de la préforme.

17. Procédé selon l'une des revendications 1 à 16, **caractérisé en ce qu'**une couronne d'appui de la préforme (1) est guidée le long du parcours (40) dans au moins une goujure en forme de rainure.

18. Procédé selon la revendication 4, **caractérisé en ce que** la préforme (1) est, à sa périphérie, en contact avec le rail (41) et les galets (42) à au moins trois endroits.

19. Système de moulage par soufflage de récipients (2) en un matériau thermoplastique, présentant au moins un dispositif de moulage par soufflage avec une zone de chauffage (24) agencée le long d'un parcours (40) d'une préforme (1) et une station de soufflage (3) équipée d'un moule de soufflage (4), et au moins une préforme (1), et dont la station de soufflage (3) est branchée sur une alimentation en gaz de soufflage équipée d'une commande d'adduction du gaz de soufflage, **caractérisé en ce que** le long d'une partie au moins du parcours (40) de la préforme (1) traversant la zone de chauffage (24) est agencée une surface de référence qui, en contact direct avec une zone périphérique de la surface de la préforme (1) au niveau de la section d'embouchure (21) de celle-ci, imprime à la préforme (1) un mouvement de rotation et est positionnée par rapport à la préforme (1) de façon à ce que celle-ci roule contre la surface de référence, et **en ce que** cette surface de référence est formée par la surface d'un galet (42) et que les galets (42) sont reliés entre eux par une chaîne de transport (43) entraînée selon une direction de transport (45).

20. Système selon la revendication 19, **caractérisé en ce que** le galet (42) est un galet moteur.

21. Système selon l'une des revendications 19 ou 20, **caractérisé en ce que** chaque préforme (1) est, pour en assurer le guidage, en contact avec un rail (41) et deux galets (42).

22. Système selon l'une des revendications 19 ou 21, **caractérisé en ce que** les galets (42) sont entraînés par roulement sur un contre-rail (47).

23. Système selon l'une des revendications 19 à 22, **caractérisé en ce que** l'un au moins des galets (42) est agencé de façon à être serré contre les préformes (1).

24. Système selon la revendication 23, **caractérisé en ce que**, le long du parcours (40), chaque deuxième galet (42) est activement serré contre la préforme (1).

25. Système selon les revendications 21 et 22, **caractérisé en ce que** les rails (41) et les contre-rails (47) sont placés de façon à assurer, sur une section au moins, un serrage de l'un par rapport à l'autre.

26. Système selon l'une des revendications 19 á 25, **caractérisé en ce que** la zone de chauffage (24) est conçue de façon à chauffer des préformes positionnées verticalement avec leur section d'embouchure orientée vers le haut.

27. Système selon l'une des revendications 19 á 25, **caractérisé en ce que** la zone de chauffage (24) est conçue de façon à chauffer des préformes positionnées verticalement avec leur section d'embouchure orientée vers le bas.

28. Système selon l'une des revendications 19 à 27, **caractérisé en ce que**, dans la zone de chauffage (24) aussi bien que dans la zone de moulage par soufflage des préformes (1), tous les éléments de guidage des préformes (1) sont agencés de façon à assurer le maintien des préformes (1) à un niveau de hauteur essentiellement constant.

29. Système selon l'une des revendications 19 à 28, **caractérisé en ce que** les galets (42) assurent un entraînement par friction des préformes (1).

30. Système selon l'une des revendications 19 à 28, **caractérisé en ce que** les galets (42) assurent un entraînement par complémentarité de formes des préformes (1).

31. Système selon l'une des revendications 19 à 30, **caractérisé en ce que** le guidage des préformes (1) aussi bien dans la zone d'introduction des préformes (1) dans la zone de chauffage (24) que dans la zone de sortie des préformes (1) de la zone de chauffage (24) est assuré selon un agencement essentiellement horizontal des préformes (1).

32. Système selon l'une des revendications 19 à 31, **caractérisé en ce que**, le long de la zone de chauffage (34), les préformes sont transportées de sorte qu'une zone intérieure de la section d'embouchure (21) reste essentiellement libre de tout élément de construction de la zone de chauffage (24).

33. Système selon l'une des revendications 19 à 32, **caractérisé en ce que**, le long de la zone de chauffage (24), les préformes (1) sont guidées aussi bien par un guidage axial que par un guidage radial.

34. Système selon l'une des revendications 19 à 33, **caractérisé en ce que**, sur une section au moins du parcours (40), des couronnes d'appui des préformes (1) sont agencées de façon à être guidées selon la direction d'un axe longitudinal (51) de la préforme.

35. Système selon l'une des revendications 19 à 34, **caractérisé en ce que**, le long de la zone de chauffage (24), chaque préforme (1) est guidée à au moins trois endroits de sa surface espacés le long d'un périmètre de la préforme (1).

36. Système selon l'une des revendications 19 à 35, **caractérisé en ce que** le galet (42) est logé sur un élément porteur (55).

37. Système selon la revendication 36, **caractérisé en ce que** l'élément porteur (55) porte trois galets (42, 56, 57) pour maintenir la préforme (1).

38. Système selon la revendication 36 ou 37, **caractérisé en ce qu'**un seul des galets (42, 56, 57) est un galet moteur.

39. Système selon l'une des revendications 36 à 38, **caractérisé en ce que** le galet entraîné (42) est couplé à une roue motrice (60) par l'intermédiaire d'un arbre (59).

40. Système selon l'une des revendications 36 à 39, **caractérisé en ce que** la roue motrice (60) roule contre un élément profilé (61).
